# EUROPEAN PATENT APPLICATION

(11) **EP 4 737 055 A1**
(43) Date of publication of application: **06.05.2026**
(21) Application number: 24901756.7
(22) Date of filing: 19.08.2024
(51) Int. Cl.: B23K 37/04

(54) **ALIGNMENT AND CLAMPING TOOLING FOR AUTOMATIC ASSEMBLY WELDING OF VEHICLE DOOR RING, AND WELD SEAM ALIGNMENT METHOD THEREFOR**

(30) Priority: 01.08.2024 CN 202411049043
(71) Applicant: Wuxi Siasun Robot & Automation Co., Ltd., Wuxi, Jiangsu 214000 (CN)
(72) Inventor: FAN, Weiguo, Wuxi Jiangsu 214000 (CN); HAN, Xichun, Wuxi Jiangsu 214000 (CN); JIA, Jiqing, Wuxi Jiangsu 214000 (CN); WANG, Zi, Wuxi Jiangsu 214000 (CN); YANG, Qiuye, Wuxi Jiangsu 214000 (CN); REN, Chao, Wuxi Jiangsu 214000 (CN)
(74) Representative: Bayramoglu et al.
(86) International application number: PCT/CN2024/112991
(87) International publication number: WO 2026/025553

(57) **Abstract**

The present disclosure relates to an alignment clamping fixture for automatic tailor welding of an automotive door ring and a welded seam alignment method therefor. The alignment clamping fixture for automatic tailor welding of an automotive door ring includes a gripper unit and a clamp unit, where the gripper unit is connected to a working end of a robotic arm; the gripper unit includes a gripper frame, and a plurality of vision camera mechanisms and a plurality of suction cup mechanisms are mounted at a bottom of the gripper frame in a fit manner, respectively; and the clamp unit includes a clamp base, a plurality of first alignment mechanisms are mounted at a top of the clamp base in a fit manner, the first alignment mechanisms are configured to clamp a workpiece, a light source is arranged in an individual first alignment mechanism, and the light source illuminates the workpiece from a back surface of the workpiece, so that the vision camera mechanisms position welded seams on the workpiece. The alignment clamping fixture for automatic tailor welding of an automotive door ring features high use flexibility, can realize flexible and automatic alignment and assembling of the welded seams, is high in stability and operation continuity, and is high in alignment accuracy and good in assembling quality.

## Description

### TECHNICAL FIELD

The present disclosure relates to the technical field of automobile manufacturing, and in particular, to an alignment clamping fixture for automatic tailor welding of an automotive door ring and a welded seam alignment method therefor.

### BACKGROUND

An automotive door ring is formed by assembling and welding a plurality of door ring plates. Before laser welding, the door ring plates need to be placed in place and positioned, which facilitates subsequent automatic welding by a laser welding machine. The positioning accuracy of the door ring plates before welding directly affects the subsequent welding quality of the automotive door ring.

In the related art, a Chinese Patent CN114713983A discloses an automatic assembly fixture for a laser welded steel plate of an automotive door ring and an operation method. A vision camera mechanism and a welding driving mechanism are disposed, so that a welded seam between two adjacent steel plates can be adjusted. After the welded seam is adjusted to be in place, the steel plates are positioned by using an electromagnetic assembling component, thereby ensuring the welding quality of the door ring.

However, the foregoing automatic assembly fixture for a laser welded steel plate of an automotive door ring has the following problems:
(1) All mechanisms and components in the foregoing automatic assembly fixture are fixed on a base plate, causing that parts are placed too compactly. When a door ring with four or more welded seams is assembled, a problem that the steel plates cannot be placed is caused. Therefore, the automatic assembly fixture is difficult to apply to the assembly of all door ring types.
(2) For the vision camera mechanism in the foregoing automatic assembly fixture, the vision camera is fixed on a rotary driving device. The rotary driving device is fixed on a lift driving device. That is, the vision camera is supported by a cantilever. The longer the cantilever is, the lower the fixed position accuracy is, resulting in that repeated positioning accuracy of the vision camera cannot reach 0.02 mm. Finally, the door ring assembling quality is reduced and the rate of finished products is low. In addition, the structures of the rotary driving device and the lift driving device are complex, and high in failure rate, causing poor equipment operation continuity.
(3) When the foregoing automatic assembly fixture aligns the steel panels, an auxiliary light source usually needs to be disposed beside the camera for illustration, and an integrated light source is disposed on a vision camera component in a vision camera mechanism to directly projects light onto the steel plates. However, the surfaces of the steel plates used for making the door ring are usually covered with various coatings, and thus reflection conditions are different. When light is projected directly, side lines of the steel plates are blurred. In this case, it is needed to frequently adjust exposure parameters of the vision camera component, so that the operation is tedious, and the assembling quality is reduced.

To sum up, in an assembling mode used by the foregoing automatic assembly fixture, a mechanical pushing method is used to implement alignment of the welded steel plates. Then welding is performed at a welding position. Because the outer contour shape of each single piece of a closed-loop welded component such as the door ring slightly deviates, when a closed door ring is spliced, a tolerance is finally accumulated to a last welded seam, resulting in a gap left at one end of the last welded seam, and finally cannot satisfy a requirement of a welding process.*** Moreover, in the foregoing automatic assembly fixture, the repeated positioning accuracy of the rotary driving device and the life driving device is low. Similarly, a requirement that the positioning accuracy of the steel plates is less than ±0.05 mm cannot be met. Therefore, the steel plates can only be forcibly close to each other, causing a condition in which the gap is left at one end of the last welded seam.

### SUMMARY

### Technical Problems

In view of the foregoing disadvantages in the existing production technology, this applicant provides an alignment clamping fixture for automatic tailor welding of an automotive door ring and a welded seam alignment method therefor. The alignment clamping fixture for automatic tailor welding of an automotive door ring features high use flexibility, can realize flexible and automatic alignment and assembling of the welded seams, is high in stability and operation continuity, and is high in alignment accuracy and good in assembling quality.

### Technical Solutions

The present disclosure adopts the following technical solution:
An alignment clamping fixture for automatic tailor welding of an automotive door ring includes a gripper unit and a clamp unit, where the gripper unit is connected to a working end of a robotic arm;
the gripper unit includes a gripper frame, a plurality of vision camera mechanisms and a plurality of suction cup mechanisms are mounted at a bottom of the gripper frame in a fit manner, respectively, the gripper unit takes photos of welded seams on a workpiece by the vision camera mechanisms, and the gripper unit sucks up the workpiece by the suction cup mechanisms, so that the workpiece is carried to a target work station of the clamp unit by the robotic arm; and
the clamp unit includes a clamp base, a plurality of first alignment mechanisms are mounted at a top of the clamp base in a fit manner, the first alignment mechanisms are configured to clamp the workpiece, a light source is arranged in each individual first alignment mechanism, the light source is disposed below the workpiece, and the light source illuminates the workpiece from a back surface of the workpiece, so that the vision camera mechanisms position the welded seams on the workpiece.

As a further improvement of the foregoing technical solution:
a structure of an individual first alignment mechanism includes: a first mounting base, where at least one first switch magnetic base is fixed on the first mounting base, the first alignment mechanism is in quick-release connection to the clamp base by the first switch magnetic base, a connecting base is fixed at a top of the first mounting base, a telescopic air cylinder is fixed on the connecting base, an output end of the telescopic air cylinder is connected to the light source, a base plate is fixed at a top of the connecting base, a strip-shaped through hole is formed in an end surface of the base plate, a plurality of electromagnets are mounted in a spaced manner at a top of the base plate, a light-transmitting gap is formed between two adjacent electromagnets, and the light-transmitting gap is disposed corresponding to the strip-shaped through hole; and
the telescopic air cylinder drives the light source to perform a linear motion, so that the light source illuminates the workpiece from the back surface of the workpiece through the light-transmitting gap.

A structure of an individual first alignment mechanism includes: a first mounting base, where at least one first switch magnetic base is fixed on the first mounting base, the first alignment mechanism is in quick-release connection to the clamp base by the first switch magnetic base, a connecting base is fixed at a top of the first mounting base, a telescopic air cylinder is fixed on the connecting base, an output end of the telescopic air cylinder is connected to the light source, a base plate is fixed at a top of the connecting base, a strip-shaped through hole is formed in an end surface of the base plate, a plurality of electromagnets are mounted in a spaced manner at a top of the base plate, a light-transmitting gap is formed between two adjacent electromagnets, and the light-transmitting gap is disposed corresponding to the strip-shaped through hole; and
the telescopic air cylinder drives the light source to perform a linear motion, so that the light source illuminates the workpiece from the back surface of the workpiece through the light-transmitting gap.

A fixing plate group is fixed at the bottom of the gripper frame, the fixing plate group includes a plurality of first fixing plates and a plurality of second fixing plates, and at least one suction cup mechanism is mounted on each of the first fixing plates and the second fixing plates in a fit manner; and
for an individual first fixing plate, at least one vision camera mechanism and pressing finger mechanisms disposed in one-to-one correspondence to the vision camera mechanisms are further mounted in a fit manner.

A structure of an individual vision camera mechanism includes: a camera mounting plate, where a vision camera is fixed on the camera mounting plate, a plurality of first quick locking devices are disposed on the camera mounting plate around the vision camera, the vision camera mechanism is in quick-release connection to the first fixing plate by the first quick locking devices, a first fixing pin hole and a second fixing pin hole are formed in an end surface of each of the camera mounting plates, respectively, and the vision camera mechanism is positioned at a mounting position on the first fixing plate by the first fixing pin hole and the second fixing pin hole.

A structure of an individual pressing finger mechanism includes: a pressing finger mounting base, where a plurality of second quick locking devices are fixed on the pressing finger mounting base, the pressing finger mechanism is in quick-release connection to the first fixing plate by the second quick locking devices, a plurality of pressing finger air cylinders are fixed at a bottom of the pressing finger mounting base, and an output end of an individual pressing finger air cylinder is connected to a universal ball head screw; and
the pressing finger air cylinder drives a corresponding universal ball head screw to extend, so that a universal ball corresponding to the universal ball head screw leans against the workpiece.

A structure of an individual suction cup mechanism includes: a suction cup mounting base, where the suction cup mounting base is mounted with the fixing plate group in a fit manner by a rotary plunger, a suction cup is mounted at a bottom of the suction cup mounting base in a fit manner by a spring rod, a suction cup air pipe joint for connecting an external air source is mounted at a top of the suction cup mounting base in a fit manner, and the external air source drives the suction cup by the suction cup air pipe joint to suck up the workpiece.

The gripper unit is mounted with the working end of the robotic arm in a fit manner by a gripper quick-change mechanism, and a structure of the gripper quick-change mechanism includes: a quick-change mounting plate, where a planar quick-change mounting surface is arranged on a top end surface of the quick-change mounting plate, and the gripper quick-change mechanism is in fit connection to the working end of the robotic arm by the quick-change mounting surface; and
a plurality of quick-change locking devices and a plurality of quick-change locating pins are mounted at a bottom of the quick-change mounting plate in a fit manner, and the gripper quick-change mechanism is in locking connection to the gripper frame by the quick-change locking devices.

A positioning fixture is fixed at the top of the clamp base, the positioning fixture is configured to position arrangement positions of the first alignment mechanisms, the positioning fixture includes a mounting bracket, a positioning plate is fixed at a top of the mounting bracket, a plurality of spaced positioning notches are arranged at an edge of the positioning plate, and the positioning notches are in one-to-one correspondence to the first alignment mechanisms.

A plurality of supporting mechanisms for supporting the workpiece are further mounted at the top of the clamp base in a fit manner, and a structure of an individual supporting mechanism includes: a second mounting base, where at least one second switch magnetic base is fixed at a bottom of the second mounting base, the supporting mechanism is in quick-release connection to the clamp base by the second switch magnetic base, a plurality of supporting columns are fixed at a top of the second mounting base, and nylon plates are mounted at tops of all the supporting columns.

A welded seam alignment method based on the alignment clamping fixture for automatic tailor welding of an automotive door ring includes the following steps:
first step: preparation: placing each steel plate in the workpiece in place by a robot;
second step: driving, by the robotic arm, the gripper unit to move to a position above the workpiece placed in place, sucking, by the gripper unit, the workpiece placed in place by the suction cup mechanism, and then transferring, by the robotic arm, the workpiece by the gripper unit, where
when each of the welded seams on the workpiece corresponds to the light-transmitting gap in each of the first alignment mechanisms, it indicates that the robotic arm transfers the workpiece to the target work station of the clamp unit, and then the suction cup mechanism releases the workpiece;
third step: driving, by the robotic arm, the gripper unit to lift to a height, so that a distance between a lens of the vision camera in the vision camera mechanism and an upper surface of the workpiece is equal to a focal distance of the vision camera, and then extending each of the pressing finger air cylinders in the pressing finger mechanism simultaneously to drive the corresponding universal ball head screw to lean against the upper surface of the workpiece;
fourth step: extending the telescopic air cylinder in each of the first alignment mechanisms simultaneously to drive the corresponding light source to move to a position directly facing the light-transmitting gap, so that the light source illuminates the corresponding welded seam;
fifth step: taking, by the vision camera, photos at both ends of each of the welded seams and transferring photo data to an industrial personal computer, and calculating, by the industrial personal computer, a gap of each of the welded seams according to the photo data and calculating differences among gaps of different welded seams; and
calculating, by the industrial personal computer, a target position of each of the steel plates in the workpiece according to the gap of each of the welded seams, the differences among the gaps of different welded seams, and a welding requirement; and
sixth step: adjusting, by the second alignment mechanism, each of the steel plates in the workpiece to the target position, then taking, by the vision camera, photos at both ends of each of the welded seams again, and determining, by the industrial personal computer, whether each of the welded seams in the workpiece is aligned according to the photo data taken by the vision camera again, where
when each of the welded seams in the workpiece is aligned, each of the pressing finger mechanisms releases the workpiece, and the light source in each of the first alignment mechanisms retracts to an initial position; and
when each of the welded seams in the workpiece is not aligned, the fifth step and the sixth step are repeated until each of the welded seams in the workpiece is aligned.

### Beneficial Effects

The present disclosure has the following beneficial effects:

The alignment clamping fixture for automatic tailor welding of an automotive door ring provided by the present disclosure is compact and reasonable in structure and convenient to operate. By disposing the gripper unit, the position uniqueness of each mechanism in the alignment clamping fixture can be guaranteed, the working stability of the whole equipment is improved, and the positioning accuracy of the vision cameras is improved. For different types of door rings, the gripper quick-release mechanism can quickly and directly replace corresponding gripper units, so that the arrangement is facilitated, the design difficulty is reduced, the focusing operation of the vision cameras is simplified, and the work efficiency is improved.

According to the alignment clamping fixture for automatic tailor welding of an automotive door ring provided by the present disclosure, in the gripper unit, the arrangement forms of the gripper frame and the fixing plate group on the gripper frame are unique, so that the accuracy and stability of the vision cameras can be improved. The alignment clamping fixture features stable and reliable structure and low failure rate, and can improve the repeated positioning accuracy of the vision cameras. Moreover, the vision camera mechanism, the pressing finger mechanism, and the suction cup mechanism in the gripper unit feature high universality and interchangeability. When other types of door rings are processed, only the gripper frame and the fixing plate group need to be replaced, and the vision camera mechanism, the pressing finger mechanism, and the suction cup mechanism may be repeatedly used, so that the production cost is lowered.

According to the alignment clamping fixture for automatic tailor welding of an automotive door ring provided by the present disclosure, the vision camera mechanism, the pressing finger mechanism, the suction cup mechanism, the first alignment mechanism, and the supporting mechanism all can be quickly disassembled, so that different types of door rings are flexibly switched with high use flexibility and good compatibility.

According to the alignment clamping fixture for automatic tailor welding of an automotive door ring provided by the present disclosure, the vision camera pixel in the vision camera mechanism is not less than 20 megapixels. Then, the light source in the first alignment mechanism illuminates from the back surface of the workpiece, so that the impact of a coating of the workpiece on the vision camera can be avoided, and workpiece with any type of coating can have defined side lines, so that the recognition accuracy of the vision camera reaches 0.02 mm. In cooperation with the second alignment mechanism, the positioning accuracy of each of the steel plates in the workpiece can achieve ≤±0.05 mm. Finally, the tolerance between the welded seams in the workpiece is evenly distributed across each of the welded seams, so that the gap tolerance between the welded seams is maintained within 0.1 mm, which meets the requirement of a high-accuracy welding process.

The welded seam alignment method provided by the present disclosure, by disposing the vision camera mechanism and the industrial personal computer, can calculate the target position of each of the steel plates in the workpiece, so as to uniformly distribute the deviations among different welded seams to each of the welded seams, thereby reducing the requirement of a high-quality door ring on a plate material, improving the rate of finished products, and improving the welding accuracy. Moreover, the detection of the gap between the welded seams by the vision camera mechanism can prevent defective products from entering the welding process, so that the waste of the plate material is avoided and the rate of finished products is improved.

### BRIEF DESCRIPTION OF THE DRAWINGS

FIG. 1 is a schematic structural diagram of the present disclosure.
FIG. 2 is a top view of FIG. 1.
FIG. 3 is a schematic structural diagram of a gripper quick-change mechanism in the present disclosure.
FIG. 4 is a schematic structural diagram of a gripper unit in the present disclosure (the gripper quick-change mechanism is omitted).
FIG. 5 is a schematic diagram of a mounting structure of a fixing plate group in the present disclosure.
FIG. 6 is a schematic structural diagram of a vision camera mechanism in the present disclosure.
FIG. 7 is a schematic structural diagram of a pressing finger mechanism in the present disclosure.
FIG. 8 is a schematic structural diagram of a suction cup mechanism in the present disclosure.
FIG. 9 is a schematic structural diagram of a clamp unit in the present disclosure.
FIG. 10 is a schematic structural diagram of a first alignment mechanism in the present disclosure.
FIG. 11 is an explosive view of a first alignment mechanism in the present disclosure.
FIG. 12 is a schematic structural diagram of a second alignment mechanism in the present disclosure.
FIG. 13 is a schematic structural diagram of a positioning fixture in the present disclosure.
FIG. 14 is a schematic structural diagram of a supporting mechanism in the present disclosure.
FIG. 15 is a schematic structural diagram of a workpiece in the present disclosure.

In the drawings: 1, gripper quick-change mechanism; 2, gripper frame; 3, vision camera mechanism; 4, fixing plate group; 5, pressing finger mechanism; 6, suction cup mechanism; 7, clamp base; 8, first alignment mechanism; 9, second alignment mechanism; 10, positioning fixture; 11, supporting mechanism; 12, workpiece; 13, gripper pin bush; 14, gripper locking pin;
101, quick-change mounting plate; 102, quick-change mounting surface; 103, quick-change locating pin; 104, quick-change locking device;
301, camera mounting plate; 302, vision camera; 303, first quick locking device; 304, protective cover; 305, first fixing pin hole; 306, second fixing pin hole;
501, pressing finger mounting base; 502, pressing finger air cylinder; 503, universal ball head screw; 504, pressing finger air pipe joint; 505, second quick locking device;
601, suction cup mounting base; 602, suction cup; 603, spring rod; 604, suction cup air pipe joint; 605, rotary plunger;
801, first mounting base; 802, first switch magnetic base; 803, light source; 804, connecting base; 805, telescopic air cylinder; 806, electromagnet; 807, base plate; 808, limiting plate; 809, light-transmitting gap; 810, V-shaped groove; 811, positioning surface;
901, pneumatic magnetic suction cup; 902, suction cup mounting plate; 903, first driving device; 904, second driving device; 905, rotary device;
1001, positioning plate; 1002, mounting bracket; 1003, positioning notch;
1101, second mounting base; 1102: second switch magnetic base; 1103, supporting column; and 1104, nylon plate.

### DETAILED DESCRIPTION OF THE EMBODIMENTS

Specific implementations of the present disclosure will be described below in conjunction with the drawings.

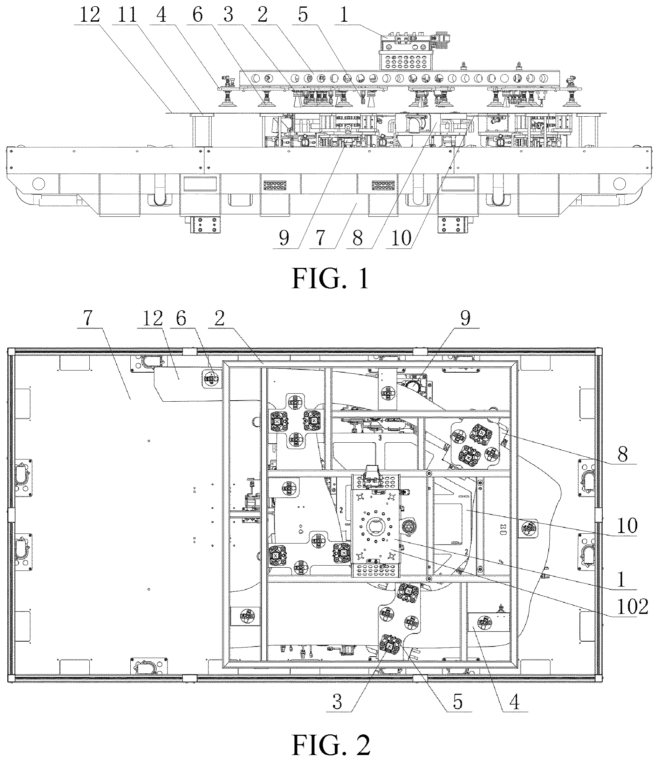

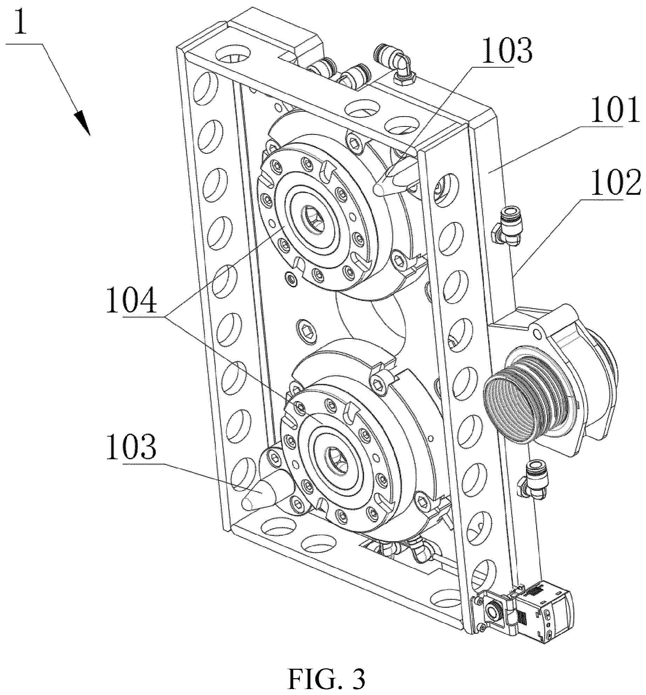

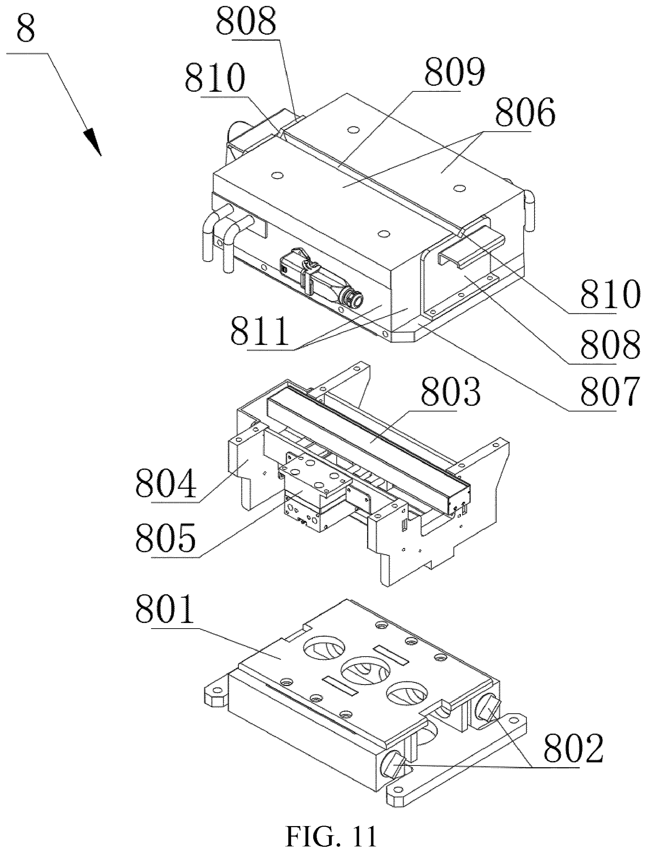

The structure and function of the present disclosure are as follows:
As shown in FIG. 1 to FIG. 15, an alignment clamping fixture for automatic tailor welding of an automotive door ring in this embodiment includes a gripper unit and a clamp unit, where the gripper unit is connected to a working end of a robotic arm; the gripper unit includes a gripper frame 2, a plurality of vision camera mechanisms 3 and a plurality of suction cup mechanisms 6 are mounted at a bottom of the gripper frame 2 in a fit manner, respectively, the gripper unit takes photos of welded seams on a workpiece 12 by the vision camera mechanisms 3, and the gripper unit sucks up the workpiece 12 by the suction cup mechanisms 6, so that the workpiece 12 is carried to a target work station of the clamp unit by the robotic arm; and the clamp unit includes a clamp base 7, a plurality of first alignment mechanisms 8 are mounted at a top of the clamp base 7 in a fit manner, the first alignment mechanisms 8 are configured to clamp the workpiece 12, a light source 803 is arranged in an individual first alignment mechanism 8, the light source 803 is disposed below the workpiece 12, and the light source 803 illuminates the workpiece 12 from a back surface of the workpiece 12, so that the vision camera mechanisms 3 position the welded seams on the workpiece 12.

The alignment clamping fixture for automatic tailor welding of an automotive door ring in this embodiment includes a gripper unit and a clamp unit, where the gripper unit includes a gripper quick-change mechanism 1, a gripper frame 2, a vision camera mechanism 3, a fixing plate group 4, a pressing finger mechanism 5, and a suction cup mechanism 6, and the clamp unit includes a clamp base 7, a first alignment mechanism 8, a second alignment mechanism 9, a positioning fixture 10, and a supporting mechanism 11.

As shown in FIG. 1 to FIG. 2, and FIG. 4, the gripper frame 2 is an entire mounting frame of the gripper unit, and is mounted with the vision camera mechanism 3, the pressing finger mechanism 5, and a suction cup mechanism 6 in a fit manner by the fixing plate group 4. In addition, a plurality of gripper pin bushes 13 and a plurality of gripper locking pins 14 are further disposed at a top of the gripper unit 1, and the gripper pin bushes 13 and the gripper locking pins 14 are configured to be mounted with the gripper quick-change mechanism 1 in a fit manner.

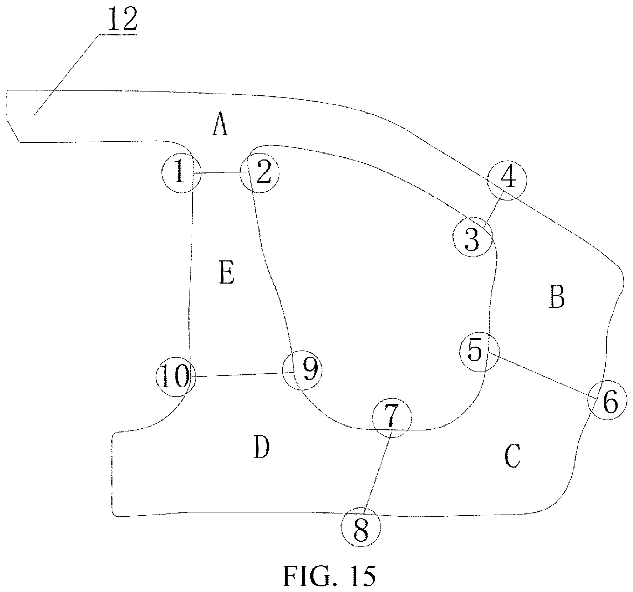

As shown in FIG. 15, in this embodiment, the workpiece 12 includes different types of an automotive door ring, and is formed by splicing a plurality of steel plates.

The gripper unit is mounted with the working end of the robotic arm in a fit manner by a gripper quick-change mechanism 1. As shown in FIG. 2 to FIG. 3, a structure of the gripper quick-change mechanism 1 includes: a quick-change mounting plate 101, where a planar quick-change mounting surface 102 is arranged on a top end surface of the quick-change mounting plate 101, and the gripper quick-change mechanism 1 is in fit connection to the working end of the robotic arm by the quick-change mounting surface 102. A plurality of quick-change locking devices 104 and a plurality of quick-change locating pins 103 are mounted at a bottom of the quick-change mounting plate 101 in a fit manner, and the gripper quick-change mechanism 1 is in locking connection to the gripper frame 2 by the quick-change locking devices 104. The gripper quick-change mechanism 1 implements a reliable connection between the gripper unit and the working end of the robotic arm by the quick-change mounting surface 102. In the gripper quick-change mechanism 1, the quick-change locking devices 104 are in one-to-one correspondence to the gripper locking pins 14 on the gripper frame 2, the quick-change locating pins 103 are in one-to-one correspondence to the gripper pin bushes 13, and the quick-change locking devices 104 are connected to the corresponding gripper locking pins 14 by an electric control switch, so as to implement the quick-release connection between the robotic arm and the gripper frame 2. The quick-change locating pins 103 are in close fit with the gripper pin bushes 13, so that a problem that the gripper frame 2 is displaced and moved in a process in which the robotic arm drives the gripper unit to move can be avoided, so that the reliable connection between the gripper unit and the robotic arm after repeated replacement can be guaranteed. By disposing the gripper quick-change mechanism 1, for different types of door rings, it is convenient to quickly replace the overall gripper unit on the robotic arm, so that the replacement efficiency is improved.

In this embodiment, the robotic arm is configured to drive the gripper unit to perform an action, and includes, but is not limited to, a multi-axis joint robot and a truss manipulator.

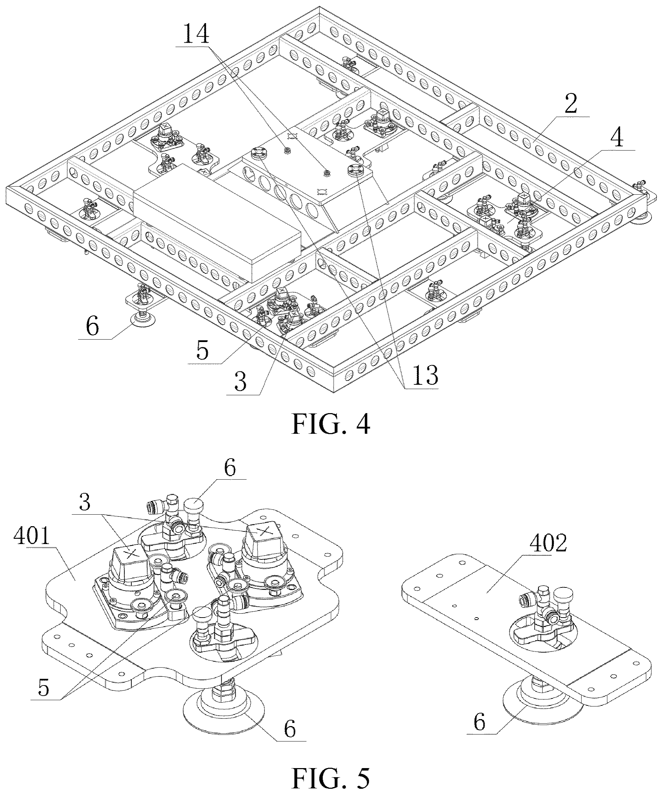

As shown in FIG. 1 to FIG. 2, and FIG. 4 to FIG. 5, a fixing plate group 4 is fixed at the bottom of the gripper frame 2, the fixing plate group 4 includes a plurality of first fixing plates and a plurality of second fixing plates, and at least one suction cup mechanism 6 is mounted on each of the first fixing plates and the second fixing plates in a fit manner; and for an individual first fixing plate, at least one vision camera mechanism 3 and pressing finger mechanisms 5 disposed in one-to-one correspondence to the vision camera mechanisms 3 are further mounted in a fit manner. That is, as shown in FIG. 4, the vision camera mechanism 3 is mounted with the gripper frame 2 in a fit manner by the first fixing plate 401, the pressing finger mechanism 2 is mounted with the gripper frame 2 in a fit manner by the first fixing plate 401, and the suction cup mechanism 6 is mounted in a fit manner by the first fixing plate 401 and the second fixing plate 402.

The arrangement position of the first fixing plate 401 on the gripper frame 2 is determined according to the positions of the welded seams on the workpiece 12, and the arrangement position of the second fixing plate 402 on the gripper frame 2 is determined according to the overall shape of the workpiece 12.

In addition, to facilitate mounting of the vision camera mechanism 3, a plurality of camera fixing pins are disposed on the first fixing plate 401.

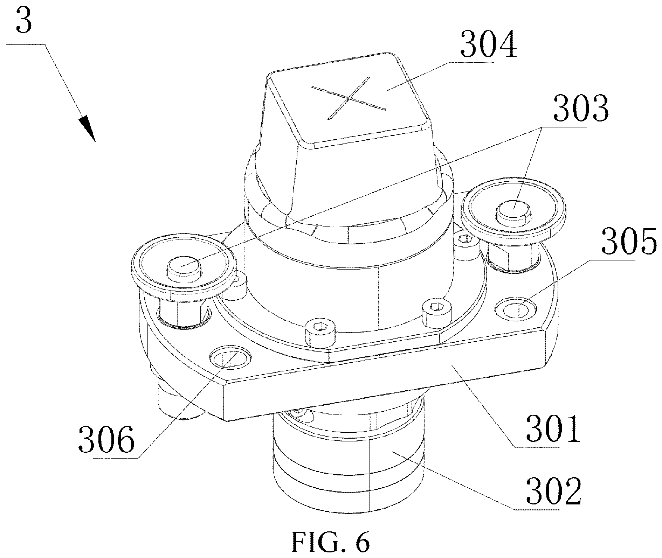

As shown in FIG. 6, a structure of an individual vision camera mechanism 3 includes: a camera mounting plate 301, where vision camera 302 is fixed on the camera mounting plate 301, a plurality of first quick locking devices 303 are disposed on the camera mounting plate 301 around the vision camera 302, the vision camera mechanism 3 is in quick-release connection to the first fixing plate by the first quick locking devices 303, a first fixing pin hole 305 and a second fixing pin hole 306 are formed in an end surface of each of the camera mounting plates 301, respectively, and the vision camera mechanism 3 is positioned at a mounting position on the first fixing plate by the first fixing pin hole 305 and the second fixing pin hole 306. The vision camera 302 is fixed on the camera mounting plate 301 by screws. In this embodiment, pixels of the vision cameras 302 are not less than 20 million, and a protective cover 304 made of a silicon material is further mounted outside the vision camera 302 in a fit manner, to protect the vision camera 302. The first quick locking devices 303 are of manual types. By manually pressing buttons at upper ends of the first quick locking devices 303, the overall vision camera mechanism 3 can be quickly disassembled from the first fixing plate 401. In this embodiment, the first fixing pin hole 305 is a circular hole, and the second fixing pin hole 306 is an oval hole. The first fixing pin hole 305 and the second fixing pin hole 306 correspondingly cooperate with the two camera fixing pins on the first fixing plate 401, so that the vision camera mechanism 3 can be repeatedly precisely positioned, thereby improving the subsequent welding accuracy.

The pressing finger mechanism 5 is mounted beside each of the vision camera mechanisms 3 in a fit manner, and the distribution principle of the pressing finger mechanism 5 and the corresponding vision camera mechanism 3 is two endpoints of a head and a tail of a corresponding welded seam on the workpiece 12. That is, two vision camera mechanisms 3 and two pressing finger mechanisms 5 are configured for each of the welded seams on the workpiece 12.

The pressing finger mechanism 5 is configured to lean against the workpiece 12, so as to prevent edge warping during of the workpiece 12 when the vision camera 302 takes photos from affecting a photographing result, thereby guaranteeing the photographing accuracy.

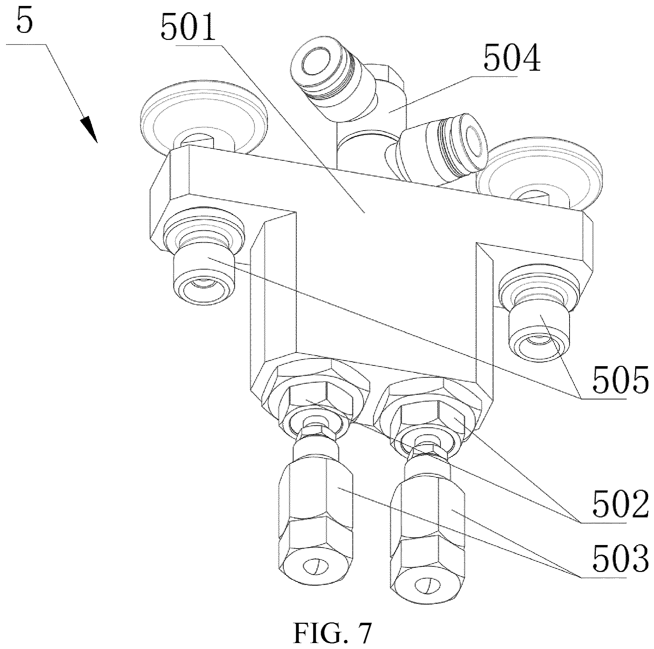

As shown in FIG. 7, a structure of an individual pressing finger mechanism 5 includes: a pressing finger mounting base 501, where a plurality of second quick locking devices 505 are fixed on the pressing finger mounting base 501, the pressing finger mechanism 5 is in quick-release connection to the first fixing plate by the second quick locking devices 505, a plurality of pressing finger air cylinders 502 are fixed at a bottom of the pressing finger mounting base 501, and an output end of an individual pressing finger air cylinder 502 is connected to a universal ball head screw 503; and the pressing finger air cylinder 502 drives a corresponding universal ball head screw 503 to extend, so that a universal ball corresponding to the universal ball head screw 503 leans against the workpiece 12. In this embodiment, the pressing finger air cylinder 502 is a single-action air cylinder, and is configured to drive the universal ball head screw 503 to perform a rectilinear motion. A pressing finger air pipe joint 504 is mounted at the top of the pressing finger mounting base 501 in a fit manner, and is configured to supply air to the pressing finger air cylinder 502. A universal ball is disposed at a working end of the universal ball head screw 503, and the universal ball head screw 503 is in contact with the workpiece 12 by the universal ball, so that the movement resistance of the workpiece 12 can be reduced in a subsequent process of aligning the welded seams. The second quick locking devices 505 are also of manual types, and are configured to quickly disassemble the pressing finger mechanism 5 from the first fixing plate 401.

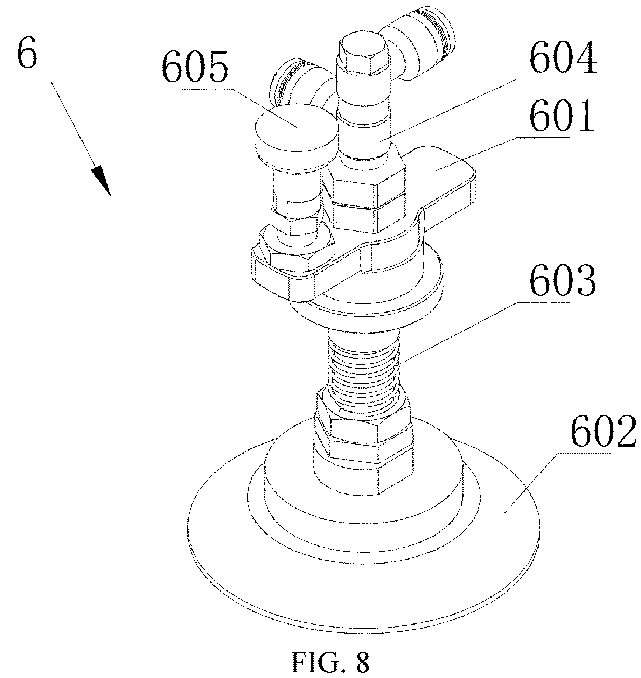

The suction cup mechanism 6 is configured to adsorb the workpiece 12. As shown in FIG. 8, a structure of an individual suction cup mechanism 6 includes: a suction cup mounting base 601, where the suction cup mounting base 601 is mounted with the fixing plate group 4 in a fit manner by a rotary plunger 605, a suction cup 602 is mounted at a bottom of the suction cup mounting base 601 in a fit manner by a spring rod 603, a suction cup air pipe joint 604 for connecting an external air source is mounted at a top of the suction cup mounting base 601 in a fit manner, and the external air source drives the suction cup 602 by the suction cup air pipe joint 604 to suck up the workpiece 12. The spring rod 603 plays a buffering role when the suction cup 602 is in contact with the workpiece 12. The rotary plunger 605 is configured to cooperate with the fixing plate group 4, so as to implement quick disassembly between the suction cup mechanism 6 and the fixing plate group 4. The suction cup air pipe joint 604 is configured to supply air to the suction cup 602.

In this embodiment, when each of the gripper units is used for a door ring of a particular type and the alignment clamping fixture processes different types of door rings, the gripper unit (including the gripper frame 2, the vision camera mechanism 3, the fixing plate group 4, the pressing finger mechanism 5, and the suction cup mechanism 6) at the working end of the robotic arm is quickly replaced by the gripper quick-change unit 1, to match the door ring type, thereby improving the welding accuracy.

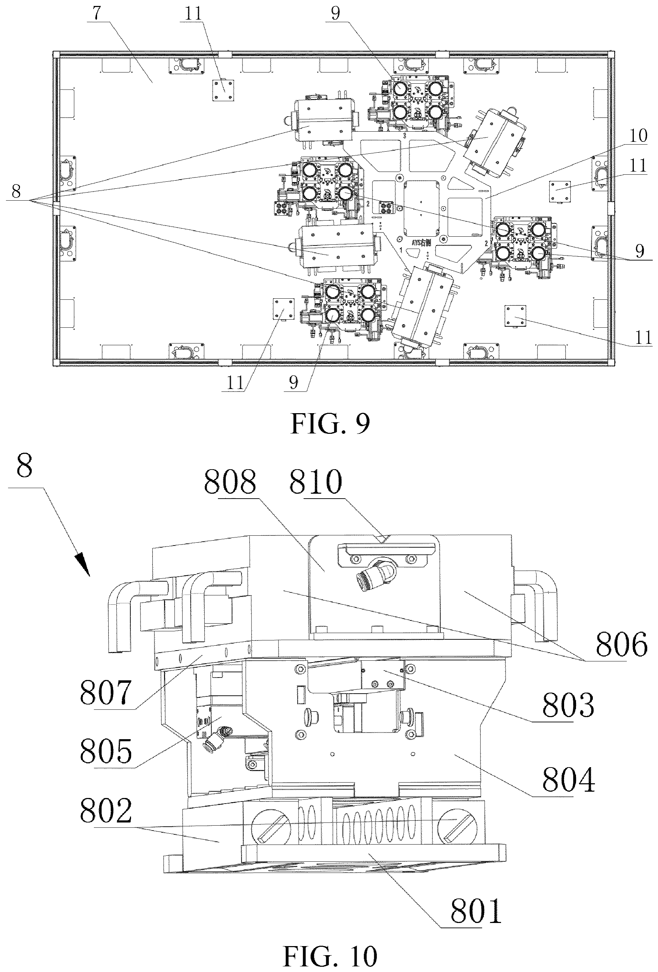

As shown in FIG. 9, the clamp base 7 is an entire mounting carrier for the gripper unit, and is fixed to a bracket or cooperates with a moving slide table. The first alignment mechanism 8, the second alignment mechanism 9, the positioning fixture 10, and the supporting mechanism 11 are all mounted at the top of the clamp base 7 in a fit manner.

As shown in FIG. 10 to FIG. 11, a structure of an individual first alignment mechanism 8 includes: a first mounting base 801, where at least one first switch magnetic base 802 is fixed on the first mounting base 801, the first alignment mechanism 8 is in quick-release connection to the clamp base 7 by the first switch magnetic base 802, a connecting base 804 is fixed at a top of the first mounting base 801, a telescopic air cylinder 805 is fixed on the connecting base 804, an output end of the telescopic air cylinder 805 is connected to the light source 803, a base plate 807 is fixed at a top of the connecting base 804, a strip-shaped through hole is formed in an end surface of the base plate 807, a plurality of electromagnets 806 are mounted in a spaced manner at a top of the base plate 807, a light-transmitting gap 809 is formed between two adjacent electromagnets 806, and the light-transmitting gap 809 is disposed corresponding to the strip-shaped through hole; and the telescopic air cylinder 805 drives the light source 803 to perform a linear motion, so that the light source 803 illuminates the workpiece 12 from the back surface of the workpiece 12 through the light-transmitting gap 809. The first alignment mechanism 8 is configured to support the workpiece 12 and can illuminate when the welded seams are aligned. In addition, after the welded seams are aligned, the first alignment mechanism also can adsorb the workpiece 12 by the electromagnet 806 to fix the workpiece 12.

The first alignment mechanism 8 is quickly disassembled from the clamp base 7 by the first switch magnetic base 802. The first switch magnetic base 802 is of a manual knob type. When the first alignment mechanism 8 works normally, the first switch magnetic base 802 is attracted and fixed to the top of the clamp base 7. When the door ring type is replaced, it is needed to move the first alignment mechanism 8. In this case, the rotary knob on the first switch magnetic base 802 is manually rotated, to demagnetize the first alignment mechanism. After the rotary knob is moved to a new position, the button is manually rotated, so that the first alignment mechanism is attracted to the clamp base 7 again.

The electromagnets 806 are fixed on the base plate 807, and the two electromagnets 806 are spaced, so that a light-transmitting gap 809 is formed between the two electromagnets. A gap width of the light-transmitting gap 809 is 10 mm to 16 mm. The two electromagnets 806 are connected and limited by a limiting plate 808. A V-shaped groove 810 is formed in the top of the limiting plate 808. The two electromagnets 806 are positioned by the V-shaped groove 810, so as to guarantee the gap width of the light-transmitting gap 809.

Two adjacent outer side wall surfaces of one electromagnet 806 form a positioning surface 811. The positioning surface 811 corresponds to a positioning notch 1003 in the positioning fixture 10, so that the mounting position of the first alignment mechanism 8 on the clamp base 7 can be determined by the positioning fixture 10.

The two electromagnets 806 in the first alignment mechanism 8 respectively adsorb or support welded edges of two steel plates in the workpiece 12, and enable a spliced welded seam of the two steel plates to fall between the light-transmitting gaps 809.

A light source 803 is driven by a telescopic air cylinder 805 to move to the light-transmitting gap 809, so as to illuminate below the workpiece 12. When illumination is not needed, the telescopic air cylinder 805 retracts, so that the light source 803 is moved away from the light-transmitting gap 809, thereby preventing welding slag from splashing from the light-transmitting gap 809 and damaging the light source 803 during subsequent welding.

The light source 803 is strip-shaped, and is configured to illuminate the workpiece 12 from bottom to top. In this case, for the vision camera 302, the background and the welded seams are bright, and the workpiece 12 is dark, which can improve the capture accuracy of the camera, thereby improving the welded seam alignment accuracy.

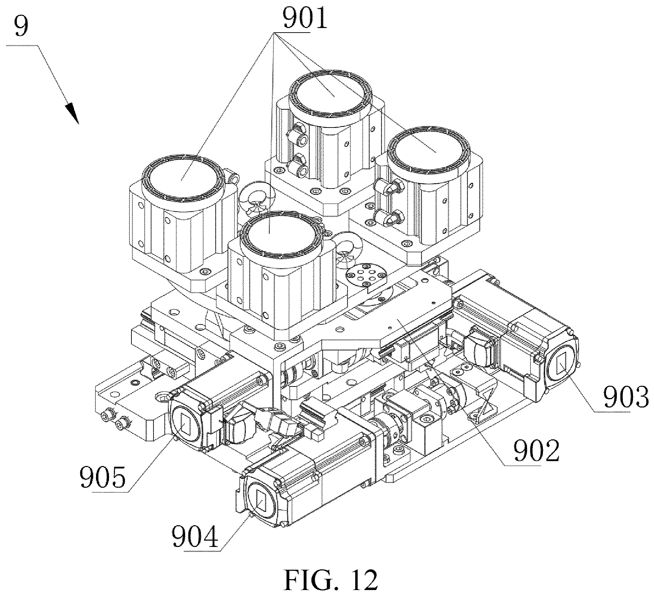

In this embodiment, a plurality of second alignment mechanisms 9 are further mounted at the top of the clamp base 7 in a fit manner. The second alignment mechanisms 9 are configured to finely adjust the position of each of the steel plates in the workpiece 12, so as to achieve uniform welded seam alignment and distribution. As shown in FIG. 12, an individual second alignment mechanism 9 includes a first driving device 903, a working end of the first driving device 903 is connected to the second driving device 904, a working end of the second driving device 904 is connected to a rotary device 905, a working end of the rotatory device 905 is connected to a suction cup mounting plate 902, and a plurality of pneumatic magnetic suction cups 901 are fixed at a top of the suction cup mounting plate 902. The pneumatic magnetic suction cups 901 are configured to adsorb end surfaces corresponding to the steel plates in the workpiece 12, and are driven by the first driving device 903 to perform a rectilinear motion along a horizontal X direction, are driven by the second driving device 904 to perform a rectilinear motion along a horizontal Y direction, and are driven by the rotary device 905 to perform a rotational motion along a circumferential direction, so as to adjust the positions of the steel plates.

In the second alignment mechanism 9, the first driving device 903 and the second driving device 904 both use a structural form in which a driving member cooperates with a slide block and a slide rail. The driving member may be an air cylinder or a motor. When the driving member is a rotating motor, a lead screw feed mechanism may be provided for transmission.

The rotary device 905 is in a structural form in which the motor cooperates with a slewing bearing.

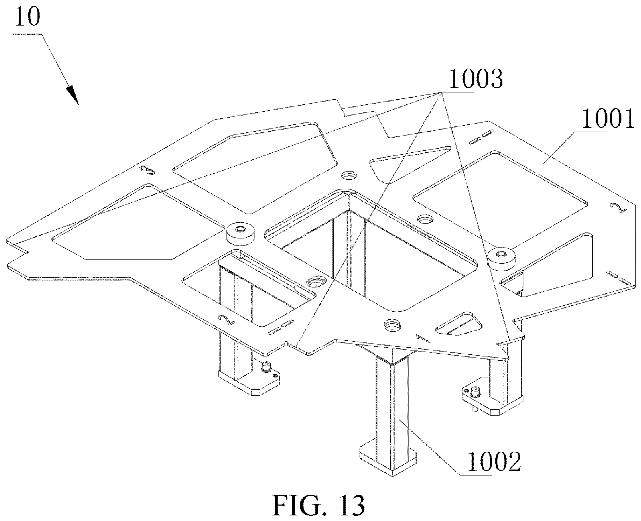

A positioning fixture 10 is fixed at the top of the clamp base 7. As shown in FIG. 13, the positioning fixture 10 is configured to position arrangement positions of the first alignment mechanisms 8, the positioning fixture 10 includes a mounting bracket 1002, a positioning plate 1001 is fixed at a top of the mounting bracket 1002, a plurality of spaced positioning notches 1003 are arranged at an edge of the positioning plate 1001, and the positioning notches 1003 are in one-to-one correspondence to the first alignment mechanisms 8. Since the light-transmitting gaps 809 in the first alignment mechanism 8 need to be in a one-to-one correspondence to the welded seams on the workpiece 12, for different types of door rings, the positioning plates with different shapes 1001 are used, so as to flexibly adjust the arrangement position of the first alignment mechanism 8 on the clamp base 7.

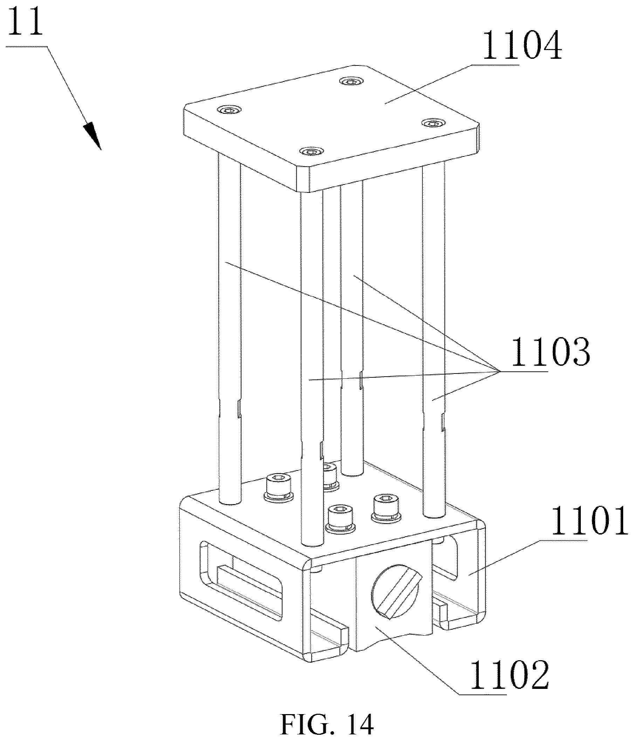

A plurality of supporting mechanisms 11 for supporting the workpiece 12 are further mounted at the top of the clamp base 7 in a fit manner. As shown in FIG. 14, a structure of an individual supporting mechanism 11 includes: a second mounting base 1101, where at least one second switch magnetic base 1102 is fixed at a bottom of the second mounting base 1101, the supporting mechanism 11 is in quick-release connection to the clamp base 7 by the second switch magnetic base 1102, a plurality of supporting columns 1103 are fixed at a top of the second mounting base 1101, and a nylon plate 1104 is mounted at tops of all the supporting columns 1103. The supporting mechanism 11 is configured to provide auxiliary support for the workpiece 12, to prevent the steel plates in the workpiece 12 from overturning. Similarly, the supporting mechanism 11 is quickly disassembled from the clamp base 7 by the second switch magnetic base 1102, so that the mounting position of the supporting mechanism 11 on the clamp base 7 can be quickly and flexibly adjusted, to fit different types of door rings.

A welded seam alignment method based on the alignment clamping fixture for automatic tailor welding of an automotive door ring includes the following steps:
first step: preparation: each steel plate in the workpiece 12 is placed in place by a robot; in this embodiment, the robot places the steel plates in a door ring structure, with placing position accuracy of 2 mm;
second step: the gripper unit is driven by the robotic arm to move to a position above the workpiece 12 placed in place, the workpiece 12 placed in position is sucked by the gripper unit by the suction cup mechanism 6, and then the workpiece 12 is transferred by the robotic arm by the gripper unit, where
when each of the welded seams on the workpiece 12 corresponds to the light-transmitting gap 809 in each of the first alignment mechanisms 8, it indicates that the robotic arm transfers the workpiece 12 to the target work station of the clamp unit, and then the suction cup mechanism 6 releases the workpiece 12;
third step: the gripper unit is driven by the robotic arm to lift to a height, so that a distance between a lens of the vision camera 302 in the vision camera mechanism 3 and an upper surface of the workpiece 12 is equal to a focal distance of the vision camera 302, and then each of the pressing finger air cylinders 502 in the pressing finger mechanism 5 extends simultaneously to drive the corresponding universal ball head screw 503 to lean against the upper surface of the workpiece 12;
fourth step: the telescopic air cylinder 805 in each of the first alignment mechanisms 8 extends simultaneously to drive the corresponding light source 803 to move to a position directly facing the light-transmitting gap 809, so that the light source 803 illuminates the corresponding welded seam;
fifth step: photos are taken by the vision camera 302 at both ends of each of the welded seams, and photo data is transferred to an industrial personal computer, and a gap of each of the welded seams is calculated by the industrial personal computer according to the photo data and differences among gaps of different welded seams are calculated; and
a target position of each of the steel plates in the workpiece 12 is calculated by the industrial personal computer according to the gap of each of the welded seams, the differences among the gaps of different welded seams, and a welding requirement; and
sixth step: each of the steel plates in the workpiece 12 is adjusted by the second alignment mechanism 9 to the target position, then photos are taken by the vision camera 302 at both ends of each of the welded seams again, and whether each of the welded seams in the workpiece 12 is aligned is determined by the industrial personal computer according to the photo data taken by the vision camera 302 again, where
when each of the welded seams in the workpiece 12 is aligned, each of the pressing finger mechanisms 5 releases the workpiece 12, and the light source 803 in each of the first alignment mechanisms 8 retracts to an initial position; and
when each of the welded seams in the workpiece 12 is not aligned, the fifth step and the sixth step are repeated until each of the welded seams in the workpiece 12 is aligned.

Specific embodiments are shown below:
In this embodiment, as shown in FIG. 15, the workpiece 12 is a five-welded seam door ring, and the workpiece 12 totally includes five steel plates: steel plate A, steel plate B, steel plate C, steel plate D, and steel plate E, and five welded seams;
10 vision camera mechanisms 3, 10 pressing finger mechanisms 5, no less than 15 suction cup mechanisms 6, 5 first alignment mechanisms 8, and 5 second alignment mechanisms 9 are arranged; 10 vision camera mechanisms 3 correspond to marks ①-⑩ in FIG. 15;
During welded seam alignment, the vision camera mechanism ① to the vision camera mechanism ⑩ respectively take photos of four corners of welded edges of the steel plates A-E, where the vision camera mechanism ① , the vision camera mechanism ② , the vision camera mechanism ③ , and the vision camera mechanism ④ position four corners of the steel plate A; the vision camera mechanism ③ , the vision camera mechanism ④ , the vision camera mechanism ⑤, and the vision camera mechanism ⑥ position four corners of the steel plate B; the vision camera mechanism ⑤ , the vision camera mechanism ⑥ , the vision camera mechanism ⑦, and the vision camera mechanism ⑧ position four corners of the steel plate C; the vision camera mechanism ⑦ , the vision camera mechanism ⑧ , the vision camera mechanism ⑨, and the vision camera mechanism ⑩ position four corners of the steel plate D; the vision camera mechanism ⑨ , the vision camera mechanism ⑩, the vision camera mechanism ①, and the vision camera mechanism ② position four corners of the steel plate E;
the vision camera mechanism ① and the vision camera mechanism ② corresponding to the welded seams between the steel plate A and the steel plate E, the vision camera mechanism ③ and the vision camera mechanism ④ corresponding to the welded seams between the steel plate A and the steel plate B, the vision camera mechanism ⑤ and the vision camera mechanism ⑥ corresponding to the welded seams between the steel plate E and the steel plate C, the vision camera mechanism ⑦ and the vision camera mechanism ⑧ corresponding to the welded seams between the steel plate C and the steel plate D, and the vision camera mechanism ⑨ and the vision camera mechanism ⑩ corresponding to the welded seams between the steel plate D and the steel plate E;
after the steel plate A to the steel plate E are placed on the clamp unit, the vision camera mechanism ① to the vision camera mechanism ⑩ take photos of the end points of corresponding welded seams, and the industrial personal computer measures the gap of each of the welded seams and the differences among the gaps of different welded seams, so as to simulate and calculate the target positions of the steel plate A to the steel plate E when a welding requirement is met;
the second alignment mechanisms 9 adjust the corresponding steel plates, position information of the steel plate A to the steel plate E is fed to the industrial personal computer continuously by the vision camera mechanism ① to the vision camera mechanism ⑩, so that the steel plate A to the steel plate E are respectively adjusted to the target positions;
whether each of the welded seams meets the tolerance requirement in the welding requirement is then confirmed by the vision camera mechanism ① to the vision camera mechanism ⑩; in this embodiment, the tolerance requirement is within ±0.05 mm, and if the tolerance requirement is met, the welded seams are aligned; and if the tolerance requirement is not met, the positions of the corresponding steel plates are finely adjusted again by the second alignment mechanisms 9, and the vision camera mechanism ① to the vision camera mechanism ⑩ feed the position information of the steel plate A back to the steel plate E to the industrial personal computer until each of the welded seams meets the tolerance requirement.

The present disclosure can be applied to tailor welding of skylights or single and double door rings with 3-10 welded seams, so that the welded seams are flexibly and automatically assembled.

The foregoing descriptions are intended to explain the present disclosure, rather than limiting the present disclosure. The scope of the present disclosure shall be defined by the claims. Any form of modification may be made within the protection scope of the present disclosure.

## Claims

1. An alignment clamping fixture for automatic tailor welding of an automotive door ring, comprising: a gripper unit and a clamp unit, wherein the gripper unit is connected to a working end of a robotic arm;
the gripper unit comprises a gripper frame (2), a plurality of vision camera mechanisms (3) and a plurality of suction cup mechanisms (6) are mounted at a bottom of the gripper frame (2) in a fit manner, respectively, the gripper unit takes photos of welded seams on a workpiece (12) by the vision camera mechanisms (3), and the gripper unit sucks up the workpiece (12) by the suction cup mechanisms (6), so that the workpiece (12) is carried to a target work station of the clamp unit by the robotic arm; and
the clamp unit comprises a clamp base (7), a plurality of first alignment mechanisms (8) are mounted at a top of the clamp base (7) in a fit manner, the first alignment mechanisms (8) are configured to clamp the workpiece (12), a light source (803) is arranged in each individual first alignment mechanism (8), the light source (803) is disposed below the workpiece (12), and the light source (803) illuminates the workpiece (12) from a back surface of the workpiece (12), so that the vision camera mechanisms (3) position the welded seams on the workpiece (12).

2. The alignment clamping fixture for automatic tailor welding of an automotive door ring according to claim 1, wherein a structure of an individual first alignment mechanism (8) comprises: a first mounting base (801), wherein at least one first switch magnetic base (802) is fixed on the first mounting base (801), the first alignment mechanism (8) is in quick-release connection to the clamp base (7) by the first switch magnetic base (802), a connecting base (804) is fixed at a top of the first mounting base (801), a telescopic air cylinder (805) is fixed on the connecting base (804), an output end of the telescopic air cylinder (805) is connected to the light source (803), a base plate (807) is fixed at a top of the connecting base (804), a strip-shaped through hole is formed in an end surface of the base plate (807), a plurality of electromagnets (806) are mounted in a spaced manner at a top of the base plate (807), a light-transmitting gap (809) is formed between two adjacent electromagnets (806), and the light-transmitting gap (809) is disposed corresponding to the strip-shaped through hole; and
the telescopic air cylinder (805) drives the light source (803) to perform a linear motion, so that the light source (803) illuminates the workpiece (12) from the back surface of the workpiece (12) through the light-transmitting gap (809).

3. The alignment clamping fixture for automatic tailor welding of an automotive door ring according to claim 1, wherein a fixing plate group (4) is fixed at the bottom of the gripper frame (2), the fixing plate group (4) comprises a plurality of first fixing plates and a plurality of second fixing plates, and at least one suction cup mechanism (6) is mounted on each of the first fixing plates and the second fixing plates in a fit manner; and
for an individual first fixing plate, at least one vision camera mechanism (3) and pressing finger mechanisms (5) disposed in one-to-one correspondence to the vision camera mechanisms (3) are further mounted in a fit manner.

4. The alignment clamping fixture for automatic tailor welding of an automotive door ring according to claim 3, wherein a structure of an individual vision camera mechanism (3) comprises: a camera mounting plate (301), wherein a vision camera (302) is fixed on the camera mounting plate (301), a plurality of first quick locking devices (303) are disposed on the camera mounting plate (301) around the vision camera (302), the vision camera mechanism (3) is in quick-release connection to the first fixing plate by the first quick locking devices (303), a first fixing pin hole (305) and a second fixing pin hole (306) are formed in an end surface of each of the camera mounting plates (301), respectively, and the vision camera mechanism (3) is positioned at a mounting position on the first fixing plate by the first fixing pin hole (305) and the second fixing pin hole (306).

5. The alignment clamping fixture for automatic tailor welding of an automotive door ring according to claim 3, wherein a structure of an individual pressing finger mechanism (5) comprises: a pressing finger mounting base (501), wherein a plurality of second quick locking devices (505) are fixed on the pressing finger mounting base (501), the pressing finger mechanism (5) is in quick-release connection to the first fixing plate by the second quick locking devices (505), a plurality of pressing finger air cylinders (502) are fixed at a bottom of the pressing finger mounting base (501), and an output end of an individual pressing finger air cylinder (502) is connected to a universal ball head screw (503); and
the pressing finger air cylinder (502) drives a corresponding universal ball head screw (503) to extend, so that a universal ball corresponding to the universal ball head screw (503) leans against the workpiece (12).

6. The alignment clamping fixture for automatic tailor welding of an automotive door ring according to claim 3, wherein a structure of an individual suction cup mechanism (6) comprises:
a suction cup mounting base (601), wherein the suction cup mounting base (601) is mounted with the fixing plate group (4) in a fit manner by a rotary plunger (605), a suction cup (602) is mounted at a bottom of the suction cup mounting base (601) in a fit manner by a spring rod (603),
a suction cup air pipe joint (604) for connecting an external air source is mounted at a top of the suction cup mounting base (601) in a fit manner, and the external air source drives the suction cup (602) by the suction cup air pipe joint (604) to suck up the workpiece (12).

7. The alignment clamping fixture for automatic tailor welding of an automotive door ring according to claim 1, wherein the gripper unit is mounted with the working end of the robotic arm in a fit manner by a gripper quick-change mechanism (1), and a structure of the gripper quick-change mechanism (1) comprises: a quick-change mounting plate (101), wherein a planar quick-change mounting surface (102) is arranged on a top end surface of the quick-change mounting plate (101), and the gripper quick-change mechanism (1) is in fit connection to the working end of the robotic arm by the quick-change mounting surface (102); and
a plurality of quick-change locking devices (104) and a plurality of quick-change locating pins (103) are mounted at a bottom of the quick-change mounting plate (101) in a fit manner, and the gripper quick-change mechanism (1) is in locking connection to the gripper frame (2) by the quick-change locking devices (104).

8. The alignment clamping fixture for automatic tailor welding of an automotive door ring according to claim 1, wherein a positioning fixture (10) is fixed at the top of the clamp base (7), the positioning fixture (10) is configured to position arrangement positions of the first alignment mechanisms (8), the positioning fixture (10) comprises a mounting bracket (1002), a positioning plate (1001)is fixed at a top of the mounting bracket (1002), a plurality of spaced positioning notches (1003) are arranged at an edge of the positioning plate (1001), and the positioning notches (1003) are in one-to-one correspondence to the first alignment mechanisms (8).

9. The alignment clamping fixture for automatic tailor welding of an automotive door ring according to claim 6, wherein a plurality of supporting mechanisms (11) for supporting the workpiece (12) are further mounted at the top of the clamp base (7) in a fit manner, and a structure of an individual supporting mechanism (11) comprises: a second mounting base (1101), wherein at least one second switch magnetic base (1102) is fixed at a bottom of the second mounting base (1101), the supporting mechanism (11) is in quick-release connection to the clamp base (7) by the second switch magnetic base (1102), a plurality of supporting columns (1103) are fixed at a top of the second mounting base (1101), and a nylon plate (1104) is mounted at tops of all the supporting columns (1103).

10. A welded seam alignment method based on the alignment clamping fixture for automatic tailor welding of an automotive door ring according to claim 1, comprising the following steps:
first step: preparation: placing each steel plate in the workpiece (12) in place by a robot;
second step: driving, by the robotic arm, the gripper unit to move to a position above the workpiece (12) placed in place, sucking, by the gripper unit, the workpiece (12) placed in place by the suction cup mechanism (6), and then transferring, by the robotic arm, the workpiece (12) by the gripper unit, wherein
when each of the welded seams on the workpiece (12) corresponds to the light-transmitting gap (809) in each of the first alignment mechanisms (8), it indicates that the robotic arm transfers the workpiece (12) to the target work station of the clamp unit, and then the suction cup mechanism (6) releases the workpiece (12);
third step: driving, by the robotic arm, the gripper unit to lift to a height, so that a distance between a lens of the vision camera (302) in the vision camera mechanism (3) and an upper surface of the workpiece (12) is equal to a focal distance of the vision camera (302), and then extending each of the pressing finger air cylinders (502) in the pressing finger mechanism (5) simultaneously to drive the corresponding universal ball head screw (503) to lean against the upper surface of the workpiece (12);
fourth step: extending the telescopic air cylinder (805) in each of the first alignment mechanisms (8) simultaneously to drive the corresponding light source (803) to move to a position directly facing the light-transmitting gap (809), so that the light source (803) illuminates the corresponding welded seam;
fifth step: taking, by the vision camera (302), photos at both ends of each of the welded seams and transferring photo data to an industrial personal computer, and calculating, by the industrial personal computer, a gap of each of the welded seams according to the photo data and calculating differences among gaps of different welded seams; and
calculating, by the industrial personal computer, a target position of each of the steel plates in the workpiece (12) according to the gap of each of the welded seams, the differences among the gaps of different welded seams, and a welding requirement; and
sixth step: adjusting, by the second alignment mechanism (9), each of the steel plates in the workpiece (12) to the target position, then taking, by the vision camera (302), photos at both ends of each of the welded seams again, and determining, by the industrial personal computer, whether each of the welded seams in the workpiece (12) is aligned according to the photo data taken by the vision camera (302) again, wherein
when each of the welded seams in the workpiece (12) is aligned, each of the pressing finger mechanisms (5) releases the workpiece (12), and the light source (803) in each of the first alignment mechanisms (8) retracts to an initial position; and
when each of the welded seams in the workpiece (12) is not aligned, the fifth step and the sixth step are repeated until each of the welded seams in the workpiece (12) is aligned.
